(19) Europäisches Patentamt
European Patent Office
Office européen des brevets

(11) EP 2 500 285 A1

(12) EUROPEAN PATENT APPLICATION

(43) Date of publication:
19.09.2012 Bulletin 2012/38

(51) Int Cl.:
B65B 31/00 (2006.01)        B65B 63/02 (2006.01)
C08J 9/22 (2006.01)

(21) Application number: 11290137.6

(22) Date of filing: 16.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Jsp International SARL
Estrees-Saint-Denis 60190 (FR)

(72) Inventor: The designation of the inventor has not
yet been filed

(74) Representative: Cozens, Paul Dennis
Mathys & Squire LLP
120 Holborn
London EC1N 2SQ (GB)

(54) Reversible compression packing

(57) A method of facilitating the transport of articles - particularly resilient closed-cell foams in bead form - between a source and a destination, comprising the steps of: compressing the articles at the source; transporting the articles to the destination; and recovering the articles at the destination by forcibly decompressing the articles. Transporting compressed articles reduces storage and transport costs.

Figure 1

**EP 2 500 285 A1**

**Description**

This invention relates to a method of and apparatus for the reversible compression packing of articles. This invention is especially relevant to the storage and/or transportation of resilient cellular material, such as resilient closed-cell foams, particularly when in bead form.

Generally, suitable materials for this process comprise closed-cell foams which under one set of environmental conditions (typically of temperature and/or pressure over certain timescales) are permeable to atmospheric gases (such as nitrogen, oxygen and carbon dioxide) whereas under other another set of conditions are resilient. Examples of such materials include polyolefin foams such as expanded polypropylene (EPP), expanded polyethylene (EPE), reticulated or cross-linked polyethylene (x-PE), expanded polystyrene (EPS) and polyamide foams.

There is a substantial worldwide market for products made of moulded closed-cell foams. The precursor material is typically supplied in the form of pre-expanded foam beads of specific characteristics; the beads are subsequently moulded, for example in steam-chests, into a final product. An example of such material is the ARPRO® product of JSP Corporation, which comprises beads of expanded polypropylene of spherical or elliptical shape and approximately 2-5 mm diameter.

ARPRO® beads are often transported from production plants to storage depots and to customers in curtain-sided trailers. Transportation and storage can form a very significant element of customers' costs as although the material is relatively light it can be very bulky - for example, material currently requiring a 120 m$^3$ trailer for transport may weigh no more than 1.5 tonnes. There are also handling issues, as filling a trailer with beads (which is often done pneumatically) can take a considerable time and require particular precautions to be taken, for example against electrostatic charges.

The present invention therefore aims to provide an improved method and apparatus for the efficient storage and transportation of resilient cellular material such as resilient closed-cell (such as expanded polymer) foam products, especially the bead form of expanded polyolefin foams such as polypropylene (PP), polyethylene (PE) and reticulated polyethylene (x-PE).

According to another aspect of the present invention there is provided a method of compressing an assembly of articles, the method comprising: placing the articles in a pressure and/or heated vessel, degassing the articles; and exposing the degassed articles to ambient conditions, such that the pressure difference between the pressure outside the articles and inside the articles causes a structural collapse of the articles. This may reduce the volume occupied by the articles and thereby reduce storage and transport costs.

Preferably, the step of degassing the articles comprises subjecting the articles to a reduced pressure and/or steam. Preferably, the reduced pressure is at least -0.5 bar gauge, more preferably up to -1 bar gauge.

Preferably, the step of degassing the articles is performed at an elevated temperature. The elevated temperature may be above 50˚C, up to 135˚C or between 50˚C and 110˚C, preferably approximately 60˚C.

Preferably, the step of degassing the articles is performed for a predetermined time period, which may be at least 5 hours, up to 12 hours, preferably between 5 and 8 hours.

Preferably, the method further comprises compressing the assembly of collapsed articles. This can further reduce the total volume of the articles by forcing them to pack together more efficiently and, potentially, further collapsing them. This may further reduce the volume occupied by and/or stabilise the reduced-volume articles thereby providing additional savings in storage and transport costs.

Preferably, the step of compressing the assembly of collapsed articles comprises subjecting the articles to a compressed gas, such as compressed air. Preferably, the compressed gas is at a pressure of approximately 4kbar.

Alternatively, or in addition, the step of compressing the assembly of collapsed articles may comprise subjecting the articles to mechanical compression.

Preferably, the step of compressing the assembly of collapsed articles is performed at an elevated temperature, for example up to 60˚C, and preferably for a determined time period, for example until the volume of the assembly of articles is approximately constant.

Preferably, the method further comprises relaxing the collapsed articles such that they partially recover from being compressed. This can allow the articles to stabilise in their degassed and compressed state.

Preferably, the relaxing step is performed at ambient pressure. Alternatively, the relaxing step is performed at an elevated temperature, for example, up to 45˚C or more preferably between 20˚C and 25˚C.

Preferably, relaxing step is performed for a predetermined time period, such as for at least 72 hours.

Preferably, the method further comprises placing the assembly of collapsed articles in a restraining container. This can prevent the collapsed articles undergoing spontaneous partial or complete recovery (termed 'relaxation').

The restraining container may be a flexible container, for example, a woven sack.

According to another aspect of the present invention there is provided a method of recovering articles, the method comprising: receiving at a destination articles which have been compressed at a source and transported from the source to the destination; and forcibly decompressing at the destination the articles to reinstate them to their original form.

Forcibly decompressing compressed articles can enable the recovery of articles that have insufficient resilience to allow them to spontaneously recover their initial character.

References to 'forcibly decompressing' articles may be understood in some circumstances to describe a process of 're-inflating' the articles.

Alternatively, the articles are placed in an environment which allows them to spontaneously decompress or re-inflate of their own accord.

Preferably, the step of forcibly decompressing the articles comprises introducing a gas - such as air or an atmospheric gas - into the articles.

Preferably, the step of forcibly decompressing the articles comprises pressurising the articles to a predetermined pressure. This predetermined pressure may be at least 5 bar or between 1 and 10 bar.

This may allow customers (recipients) of shipments of the compressed articles to recover them using relatively commonplace processing equipment, namely a pressure tank.

Preferably, the step of forcibly decompressing the articles is performed at an ambient temperature. Alternatively, the step of forcibly decompressing the articles is performed at an elevated temperature, such as between 40˚C and 80˚C, preferably approximately 50˚C.

Preferably, the step of forcibly decompressing the articles is performed for a predetermined time period, for example at least 10 hours or between 10 to 20 hours, preferably approximately 15 hours.

Preferably, at least one of the temperature and the pressure are varied according to a predetermined profile during the predetermined time period.

Preferably, subsequently the articles are returned to ambient conditions.

Preferably, the articles are maintained at ambient conditions for a time period of at least 48 hours.

Preferably, the step of forcibly decompressing the articles further comprises pre-treating the articles.

Preferably, the step of forcibly decompressing the articles is performed at least in part as the articles exit a holding tank.

Preferably, the step of forcibly decompressing the articles is performed at least in part as the articles are subsequently processed.

According to another aspect of the present invention there is provided a method of facilitating the transport of articles between a source and a destination, comprising the steps of: compressing the articles at the source; transporting the articles to the destination; and recovering the articles at the destination by forcibly decompressing the articles.

Alternatively, recovering the articles at the destination by is achieved by placing the articles in an environment which allows them to spontaneously decompress or re-inflate of their own accord.

This may reduce the amount of infrastructure required to transport low-resilience articles that would otherwise have to be transported in an uncompressed state.

According to another aspect of the present invention there is provided apparatus for recovering articles at a destination, comprising: means for receiving articles which have been compressed at a source and transported from the source to the destination; and means for forcibly decompressing the articles to reinstate them to their original form.

Preferably, the means for forcibly decompressing the articles further comprises means for introducing a gas - such as air or an atmospheric gas - into the articles.

Preferably, the means for introducing a gas into the articles is adapted to pressurise the articles to a predetermined pressure, for example to at least 5 bar, or more preferably between 5 and 10 bar.

Preferably, the means for forcibly decompressing the articles is adapted to operate at an ambient temperature. Alternatively, the means for forcibly decompressing the articles is adapted to operate at an elevated temperature, such as between 40˚C and 60˚C, preferably approximately 50˚C.

Preferably, the means for forcibly decompressing the articles is adapted to operate for a predetermined time period, such as at least 10 hours, preferably between 10 to 20 hours, more preferably approximately 15 hours.

Preferably, the means for forcibly decompressing the articles is adapted to vary at least one of the temperature and the pressure according to a predetermined profile during the predetermined time period.

Preferably, the means for forcibly decompressing the articles is adapted to subsequently return the articles to ambient conditions.

Preferably, the means for forcibly decompressing the articles is adapted to maintain the articles at ambient conditions for a time period of at least 48 hours.

Preferably, the means for forcibly decompressing the articles is further adapted to pre-treat the articles.

Preferably, the means for forcibly decompressing the articles is adapted to forcibly decompress the articles at least in part as the articles exit a holding tank.

Preferably, the means for forcibly decompressing the articles is adapted to forcibly decompress the articles at least in part as the articles are subsequently processed.

Further features of the invention are characterised by the dependent claims.

Any apparatus feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to apparatus aspects, and vice versa.

These and other aspects of the present invention will become apparent from the following exemplary embodiments that are described with reference to the following figures in which:

Figure 1 shows in overview a comparison of two different schemes A and B for the storage and transport of closed-cell foam beads, the latter scheme B using a reversible compression packing process;

Figure 2 is a microscope image of a cut away section through a closed-cell foam bead;

Figure 3 is a schematic diagram showing the initial relative volumes of the constituents of a container of pre-expanded foam beads;

Figure 4 is a graph showing the experimentally determined relationship between bead density and un-compacted bulk density;

Figures 5 and 6 are schematic block diagrams showing in overview various aspects of the reversible compression packing process;

Figure 7 shows a block diagram of compression apparatus used for the compression stages of the reversible compression packing process;

Figure 8 is a graph showing data from the degassing stage of the process;

Figure 9 shows the relative volumes of the constituents of a container of pre-expanded foam beads during the various stages of the process;

Figure 10 is a graph showing the variation of bead volume over time for the various stages of the process; and

Figure 11 shows a block diagram of an alternative compression apparatus using steam.

## Overview

The invention was developed as part of work to improve the efficiency of the transportation of closed-cell polyolefin foams such as expanded polypropylene (EPP) - one brand of which is known commercially as ARPRO® (and by extension, other types of polyolefin foam, including those based on polyethylene) - primarily (although not necessarily) supplied in bead form between a source and a destination.

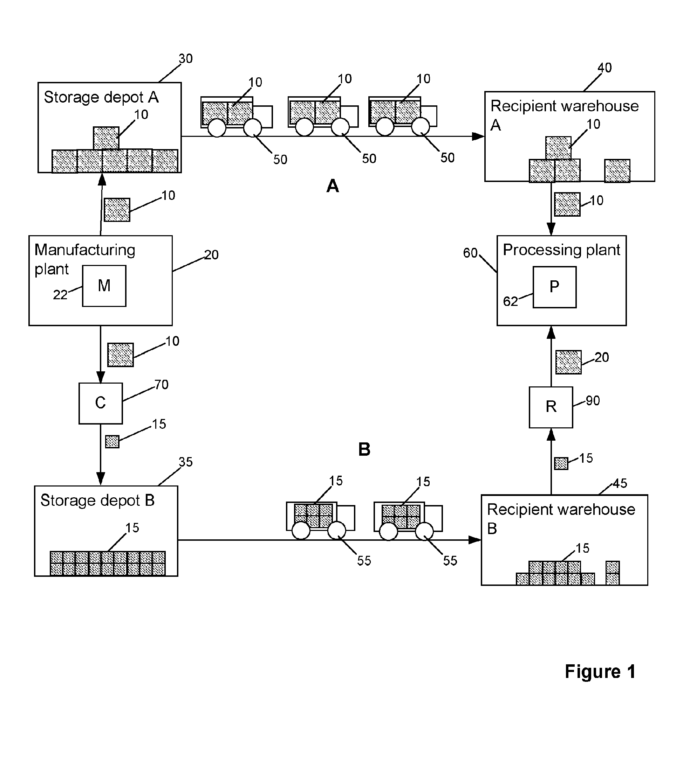

Figure 1 shows in overview a comparison of two different schemes A and B for the storage and transport of closed-cell foam beads. Scheme A is a conventional method; Scheme B is an improved method using reversible compression packing.

In Scheme A, a manufacturer produces a bead product 10 in manufacturing plant 20 using manufacturing apparatus 22, and subsequently stores the bead product 10 in storage depot 30. Delivery of bead product 10 from storage depot A 30 to recipient warehouse 40 is by means of a fleet of trucks 50. Bead product 10 is subsequently processed in processing plant 60 using processing apparatus 62.

In Scheme B, the manufacturer similarly produces a bead product 10 in manufacturing plant 20 using manufacturing apparatus 22, but subsequently uses compression apparatus 70 to reversibly compress the bead product 10 after manufacture to produce compressed bead product 15. This compressed bead product 15 is then stored in storage depot 35 and subsequently delivered via trucks 55 to recipient warehouse 45. Before use, compressed bead product 15 is recovered using recovery apparatus 90, resulting in bead product 20 and is subsequently processed (as for Scheme A) in processing plant 60 using processing apparatus 62. In a variation of Scheme B, compressed bead product 15 can recover to bead product 10 without requiring use of recovery apparatus 90.

The advantages of scheme B are that for an equivalent amount of bead product 10 manufactured at manufacturing plant 20 and delivered for processing at processing plant 60:

- storage costs are reduced

    ○ storage depot 35 can accommodate more compressed bead product 15 than can storage depot 30 of conventional bead product 10 (and/or storage depot 35 can be smaller than the equivalent storage depot 30)
    ○ recipient warehouse 45 can accommodate more compressed bead product 15 than can recipient warehouse 40 of conventional bead product 10 (and/or recipient warehouse 45 can be smaller than the equivalent recipient warehouse 40)

- transport costs are reduced

    ○ fewer trucks 55 are required to transport compressed bead product 15 than the trucks 50 required to transport bead product 10 (and/or each truck 55 may be smaller than corresponding truck 50)

There is therefore a cost saving to be made using scheme B on storage, packaging and transport which may be directly proportional to the density increase (volume reduction).

For example, the pre-densification of the foam beads prior to shipment and their recovery at the client site typically results in a 200-500% increase in packing density and a commercial advantage of a factor of 2-5 times reduction in freight costs.

There is also an environmental impact, with a reduction of the carbon footprint, emissions, noise pollution and congestion associated with transportation; storage facilities may also be smaller.

The use of reversible compression packing process as described below (as part of a scheme B) has been shown to result in recovered product which retains the same properties and performance as before the compression / transport / recovery process:

- Initial tests on samples of ARPRO® 5118 (density 18 g/l) beads indicated a collapsed volume reduction factors - or compression ratios R - of approximately R = 3 at 60˚C (R = 2, when relaxed and stabilised) were regularly achievable.

- Tests on ARPEX 4514 (19g/l) beads indicated compression ratios of approximately R = 4 at 40˚C were possible, with complete recovery to original bead size at normal atmospheric conditions after one week.

The compression ratio R is affected by rigidity of the beads (itself a function of factors such as the polymer type, bead density and temperature) and the compression forces applied to the beads (whether due to the pressure difference between atmospheric pressure and internal beads cell pressure and/or due to any additional applied forces such those due to 'compression assist', described in more detail below).

Generally, compression ratios of R = 3 - 6 are routinely achievable, the precise values depending on the polymer and bead density as well as processing conditions (and the use of compression enhancing methods such as 'compression assist', described below).

Theoretically, a maximum compression would be achieved when the compressed bead density approaches the raw material density - for ARPRO® 5118, this corresponds to a compression ratio of approximately R = 31. In practice, slightly smaller compression factors are used - not least to ensure the compression process is fully reversible without damaging the beads.

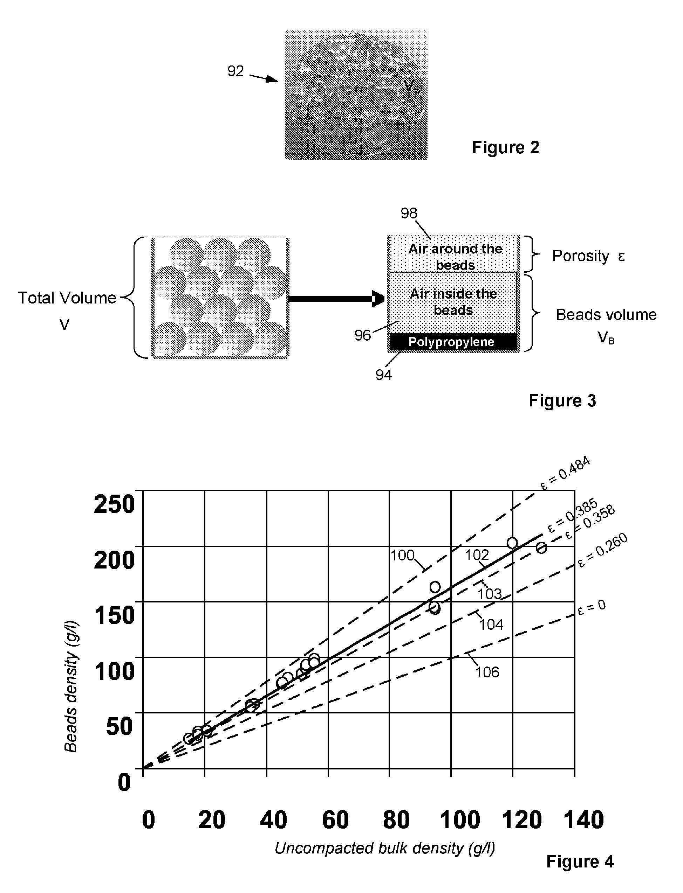

Figure 2 is a microscope image of a cut away section through a closed-cell foam bead of ARPRO® expanded polypropylene (EPP). Such beads are made by combining polypropylene resin with an activation compound, and applying heat, pressure and carbon dioxide in an autoclave. The resulting bead is approximately spherical and has an internal structure comprising a plurality of gas-filled closed cells 92.

The walls of the closed cells are thin and gas permeable so that when the bead is placed in a degassing apparatus, such as a reduced-pressure or vacuum vessel, gas is removed from the closed cells and the bead collapses under atmospheric pressure (until the pressures inside and outside the cells are equalised).

The bead volume may be further reduced by applying additional external pressure, for example, by subjecting the beads to a compressed gas; however, this must be done quickly in order to avoid reintroducing gas into the beads.

Heating the beads softens the polymer and enhances the rate of gas diffusion.

The material has a shape memory such that the bead returns to its original shape during a recovery process.

Beads of different materials have different properties when compressed:

- EPP is a resilient form of PP (polypropylene) and therefore is able to successively store and return energy after being compressed (the gas inside the cells effectively acts as a cushioning spring).
- Materials which are more resilient than PP undergo more significant amounts of relaxation after compression. Spontaneous recovery may occur with these types of materials. This can be avoided by keeping the beads under physical restraint, such as in bags, during transportation, then emptying out into a silo or similar upon delivery for recovery.

Generally, the suitability of particular beads for use in the reversible compression packing process may be assessed by consideration of their permeability and their softness at a given temperature.

Figure 3 is a schematic diagram showing the initial relative volumes of the constituents of a container of pre-expanded foam beads. This can be seen to comprise three parts:

- the bead material itself (PP in this case) 94
- the air encased in the closed cells 96
- the air around the beads 98

Porosity ε is defined in terms of the volume V in which the beads are contained and the total bead volume $V_B$ as:

$$Porosity, \varepsilon = \frac{V - V_B}{V}$$

[Eq.1]

The value of ε is therefore the free volume fraction of the volume in which the beads are contained (or the "free space" around the beads), and is therefore indicative of the packing density of the beads.

The value of porosity ε is determined by the arrangement of the beads. For the case when all beads are all similarly sized spheres, it does not depend on the bead diameter, but on their relative arrangement. Studies have shown that porosity ε may then have various possible values corresponding to particular arrangement or packing of the beads, as shown in the following table (assuming perfectly spherical, incompressible beads):

| | ε | |
|---|---|---|
| $\varepsilon_{rand,uncomp}$ | 0.484 | random, un-compacted arrangement |
| $\varepsilon_{rand, \chi o\mu\pi}$ | 0.358 | random, compacted arrangement |
| $\varepsilon_{min}$ | 0.260 | (minimum) ideal, theoretical arrangement |

A random, un-compacted arrangement is the least efficient packing arrangement (largest value of ε), whereas a degree of settling resulting in compaction can reduce the amount of "free space" to a theoretical minimum limit $\varepsilon_{min}$ .

Generally, the density of the beads $d_B$ can be defined in terms of the total bead mass or (analogously) weight $W_B$ and total bead volume $V_B$ as:

$$Bead\ density, d_b = \frac{W_B}{V_B}$$

[Eq.2]

The un-compacted bulk density $d_{UB}$ may therefore be defined as: *Uncompacted Bulk density,*

$$d_{ub} = \frac{W_B}{V}$$

[Eq.3]

Therefore, the relationship between the un-compacted bulk density $d_{UB}$ and the bead density $d_B$ can de shown to be:

$$d_b = \frac{d_{ub}}{1 - \varepsilon}$$

[Eq.4]

The relationship between the un-compacted bulk density $d_{UB}$ and the density of the beads $d_B$ would therefore be expected to be linear, providing that the porosity was independent of bead density $d_B$ (meaning that the bead packing arrangement was the same for all cases).

Figure 4 is a graph showing the experimentally determined relationship between bead density (or compacted bulk density) and un-compacted bulk density. The experimental data points show that the expected linear relationship does indeed appear to hold. In this particular example, a value of ε = 0.385 was found (plot line 102), which being lower than the random, un-compacted arrangement value of ε = 0.484 (plot line 100), indicates that in a practical situation some compaction or settling of the beads occurs (although not to the extent of $\varepsilon$ = 0.358, plot line 103).

Also shown on this graph is the limit of possible volume reduction using settling techniques alone - as indicated by the plot of $\varepsilon$ = 0.260 (plot line 104).

Any mode of goods transport - whether road, rail, sea or air - is limited to a maximum vehicle load in terms of weight and size. For the transport of low-density goods such as expanded foam beads, size rather than weight rapidly becomes the limiting factor.

It has been appreciated that although some storage and transport costs could be reduced by improved settling of the beads, thereby bringing the bulk density closer to the bead density, which is to say to a value of $\varepsilon$=0 (plot line 106), substantial reduction in costs would be achieved by reducing the volume of the beads themselves (i.e. removing the gas inside the beads).

The reversible compression packing process described below primarily reduces the volume of the beads by removing gas from inside the beads through a process of bead collapse and compression, while leaving the relative arrangement of the beads substantially unchanged (although additional compression stages may affect this also).

This process increases the bulk density so that more of the product can be accommodated in a given volume, thus saving on transport costs per unit of product by approximately the same factor as the compression factor.

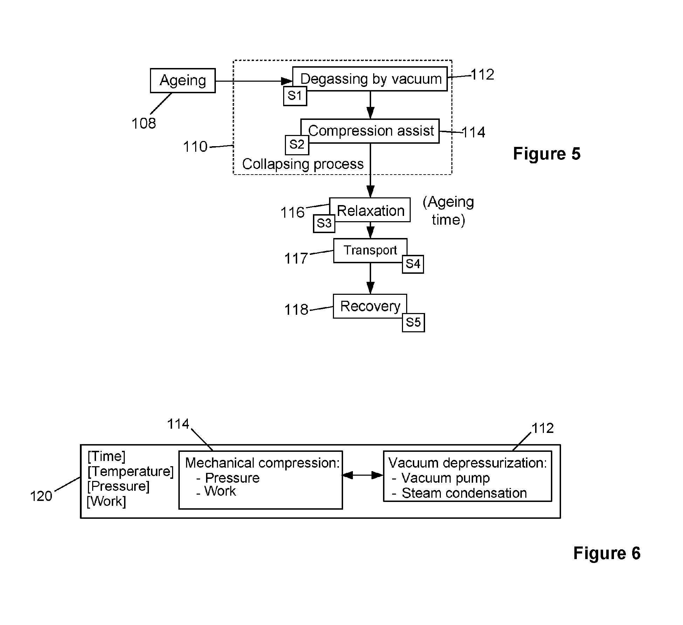

Figure 5 and 6 are schematic block diagrams showing in overview various aspects of the reversible compression packing process.

Figure 5 shows the process in broad overview showing the stages of the reversible compression packing process.

After formation, the beads are usually allowed to 'age' or stabilise 108. This involves heating the beads, for example via hot air, to a temperature of up to 80˚C and, depending of the quantity of beads and heating power involved, for between 15 minutes to 2 hours.

The beads then undergo the collapsing process 110 which typically consists of two stages:

- S1 - 'degassing' or 'depressurisation' (typically by vacuum) 112
- S2 - 'compression assist' (typically mechanically, or by application of compressed air or other fluid pressure) 114

In some embodiments stages S1 and S2 may be combined in a single step.

The bead is then allowed to relax (stage S3, 116) before being transported (stage S4, 117) and is subsequently recovered (stage S5, 118) to its original state. These steps are discussed in more detail below.

Figure 6 shows in overview various aspects of the reversible compression packing process and their interdependence, including the main variables and factors determining the process (time, temperature, pressure and work) at the S1 vacuum depressurisation step 112 (vacuum pump, or alternatively steam condensation - an embodiment discussed below) and at the S2 mechanical compression assist step 114 (pressure and work). 'Pressure' refers first to the vacuum level in the depressurisation chamber; second to the compressed air pressure in those embodiments where compressed air is used for the compression assist step. 'Work' refers to the amount of work required to be done in the compression assist step.

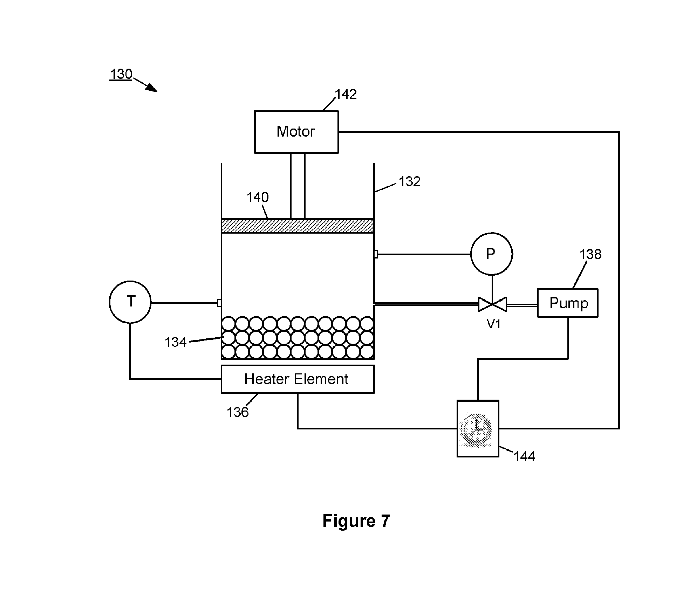

Figure 7 shows a block diagram of an example of compression apparatus used for the compression stages of the reversible compression packing process. Compression apparatus 130 comprises a pressure chamber 132 where the beads 134 are placed, which can be heated by a heating element 136. A pump 138 provides a vacuum for the S1 'degassing' / 'depressurisation' stage; a piston 140 powered by a motor 142 forms one side of the pressure chamber 132 to provide means of 'compression assist' (stage S2). The pressure in the pressure chamber 132 is controlled by a pressure controller P via a valve V1 and the temperature is controlled by a temperature controller T. All elements are time-dependent so are further controlled by a timing device 144.

As indicated in Figure 7, the main process parameters which affect compression of the beads are those that influence gas permeation of closed cells foams, namely temperature, pressure and time. Temperature also increases the softness of bead material, which assists in compression.

As an alternative to piston 140, compression assist may be achieved by use of compressed air, the pressure chamber 132 being equipped with a compressed air inlet and a vent line outlet (both with control valve connected to the pressure sensor).

Alternative forms of compression apparatus 130 may comprise some or all of the elements described above.

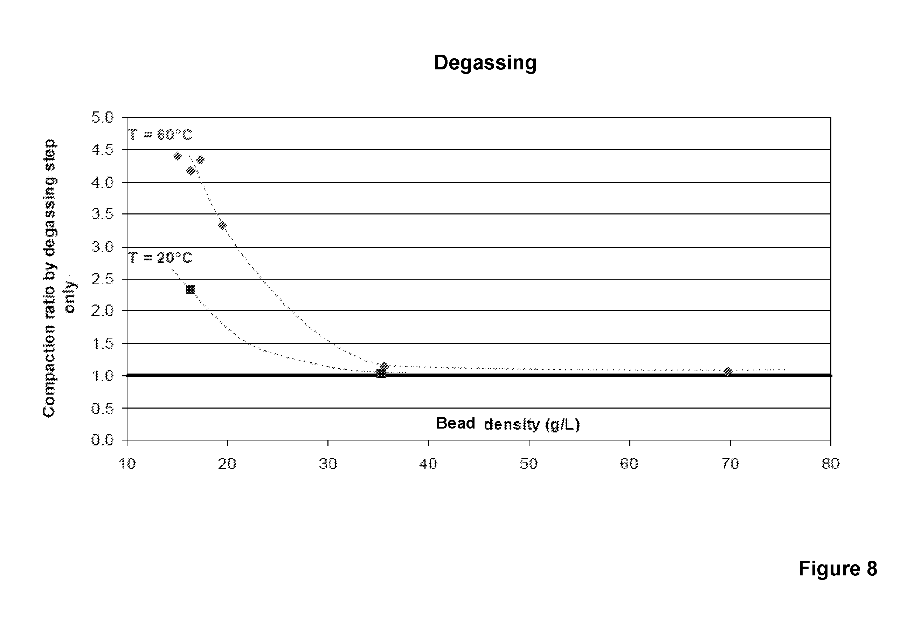

Figure 8 is a graph showing data from the degassing process, indicating the relationship between the compaction or volume reduction ratio achieved by a (non-optimised) degassing step for various bead densities at different temperatures.

The compaction ratio (or volume reduction ratio) is determined from the collapsed volume (i.e. not recovered volume). The graph shows that the highest compaction ratios (approximately x4 - x4.5) are achieved for low density beads (for example, for approximately 15g/l as opposed to 35g/l beads), especially at raised temperatures (for example, at 60˚C as opposed to 20˚C). The temperature effect becomes increasingly less pronounced for higher bead densities - with essentially no degassing effect at higher bead densities above 35 g/l.

This confirms the influence of temperature and softness of material during compression step and indicates that for densities above 35g/l compression assist is required to collapse the beads.

Other relevant factors include:

- The beads are easier to compress once they have been degassed. The compression assist step is therefore more efficient than the initial compression step.
- Although the degree of compaction for a particular bead density increases at elevated temperatures, in practice useable temperatures are limited due to melting of the beads at high temperatures eg. PP beads melt at 80˚C and are therefore typically processed at approximately 40˚C - 80˚C, typically 60˚C.
- Post-production ageing time.

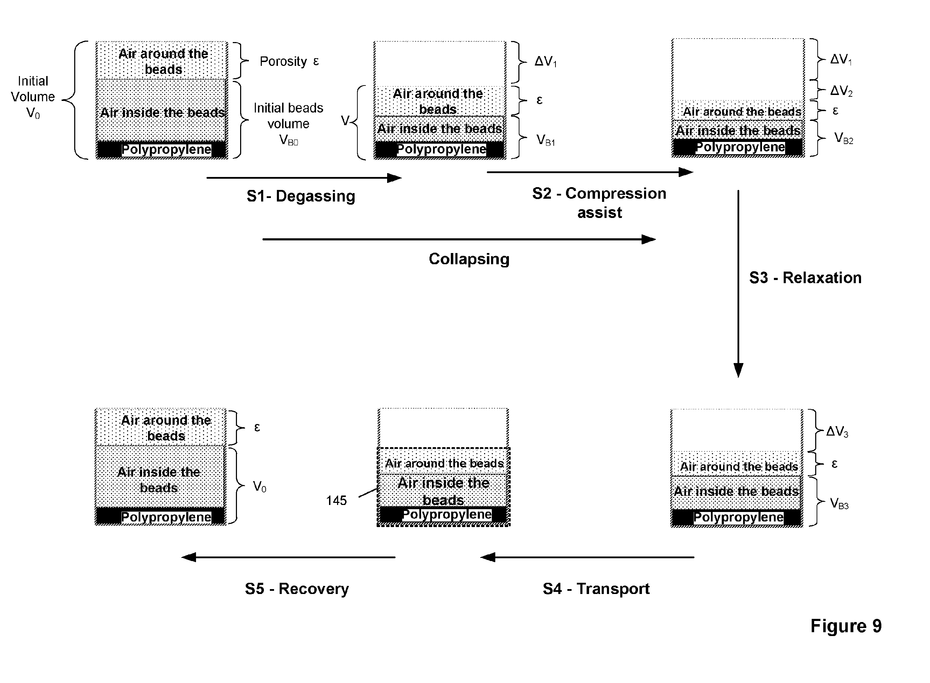

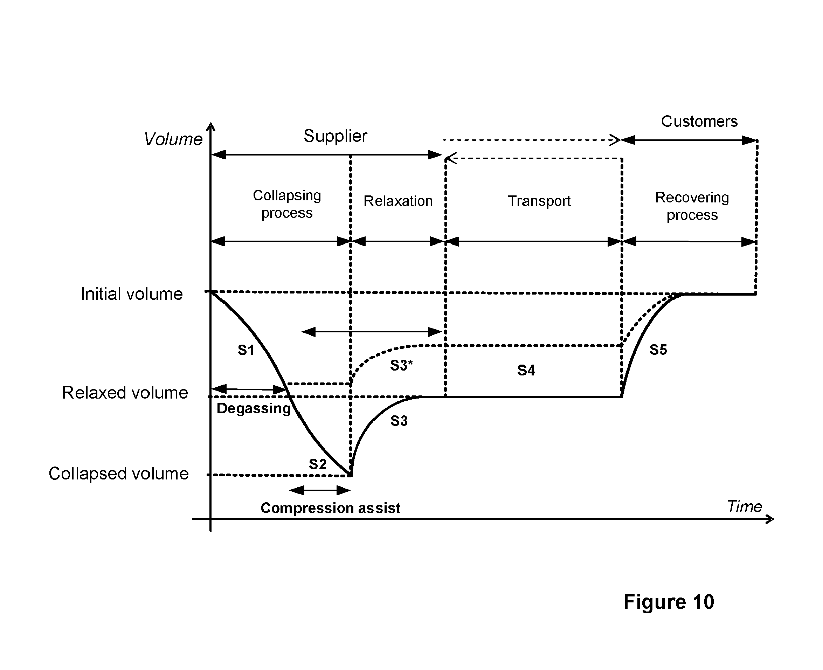

The various steps or stages S1- S5 of the process will now be discussed with reference to Figures 9 and 10, which show respectively the relative volumes of the constituents of a container of pre-expanded foam beads and the variation of bead volume over time during the various stages of the reversible compression packing process.

### - S1- 'Degassing'

The first stage in the collapsing process is 'degassing', which reduces the amount of gas inside the beads.

In some embodiments, the beads undergo an initial ageing process at an elevated temperature to ensure the beads are sufficiently gas filled to allow adequate heat transfer during the collapsing process.

Collapsing is achieved by means of degassing and (initial) compression of the beads, by placing the beads in a pressure vessel and having them undergo vacuum depressurisation (possibly at elevated temperature over a predetermined period of time.

Subsequent exposure of the degassed beads to atmospheric pressure results in the beads being compressed due to the pressure difference, the pressure outside the beads being greater than that inside the beads.

The porosity ratio - as defined as the free volume fraction of the volume in which the beads are contained (or the "free space" around the beads) - does not change significantly during the process, as this is dependent on the bead geometry and resulting packing arrangement.

The total volume of air surrounding the beads changes in direct dependence on the amount of air inside the beads as a consequence of the resultant changes in individual bead size.

Consequently, degassing reduces the volume required to store the beads from an initial value $V_0$ by an amount $\Delta V_1$.

Typically, the pressure vessel is maintained at up to -0.5 to -1 bar gauge and the process takes approximately 1-8 hours (in some cases up to 12 hours).

In some embodiments, the process is performed at an elevated temperature (the pressurisation tank being modified to include a heating system) in order to soften the beads to aid compression and to increase air diffusion. Suitable temperatures are chosen according to the material, the desired compression ratio and suitable processing time. For example, overly high temperatures (such as those in excess of the melting temperature of the beads) may affect the bead properties and/or structure; lower temperatures may result in insufficient compression ratios and/or overly long processing times. Typically, temperatures in the region of 60˚C to 80˚C are used for EPP (to ensure the temperature is clearly below the melting temperature, which is typically in the vicinity of 130˚C) - although up to 100˚C is used in some instances, for example for modified high-temperature beads.

The pressurisation tank may be pre-heated with the beads, for example for 1 hour at the degassing temperature.

This stage (S1) of the process may be characterised for example by the following measurements:

| | |
|---|---|
| Compacted collapsed volume after degassing | $V_d$ |
| Compaction / compression ratio | $R_d$ |
| Beads density after degassing | $d_{bd}$ |
| Temperature of beads after preheat / after degassing | $T_p, T_c$ |

In a commercial environment, the initial degassing step may be performed during bead manufacture, shortly or immediately after the beads are initially expanded or 'foamed'. Alternatively, the process may be performed on 'aged' beads, which have been expanded previously and stored.

### - S2 - Compression assist

Once the degassing stage has completed, the beads are in a collapsed (or partially-collapsed) state. The 'compression assist' stage reduces the total bead volume further by removing more air from inside the beads, further collapsing them. The porosity ratio - as defined as the free volume fraction of the volume in which the beads are contained (or the "free space" around the beads) - is unchanged.

Compression assist therefore reduces the volume required to store the beads by further amount $\Delta V_2$.

Typically, compression assist may be achieved, for example, by the application of compressed gas (for example, compressed air at up to 4 bar) or by mechanical means, for example by placing the beads in a rolling mill, comprising two rollers with a pre-defined gap.

The compression assist process can also be performed at an elevated temperature, potentially immediately after the collapsing step before the beads have cooled.

The process of compression assist may also affect the relative arrangement of the beads, effectively altering the value of porosity $\varepsilon$, especially if the bead containing volume has been deformed during the compression assist process.

The time required to complete the 'compression assist' step is dependent on the method used, but is typically done until the total bead volume is constant.

This stage (S2) of the process may be characterised for example by the following measurements:

| Compacted collapsed volume after compression | $V_c$ |
|---|---|
| Compaction / compression ratio | $R_c$ |
| Beads density after compression | $d_{bc}$ |

The resulting total volume is now the 'collapsed volume', the minimum volume the sample reaches.

Typically, where elevated temperatures have been used the beads are removed from the hot environment as quickly as possible in order to "freeze" them in their compressed state as they recover their intrinsic rigidity on cooling.

### - S3 - Relaxation

In order to stabilise the beads in their degassed and compressed state, the compressed beads may be allowed to partially recover some of their original shape and size, increasing the volume of gas inside the beads slightly so that the net reduction in volume required to store the beads is by an amount $\Delta V_3$.

After such relaxation, beads of, for example, polypropylene (PP) are in a 'metastable' state, in that spontaneous recovery of a PP bead from a compressed state to its original state is unlikely to occur in the absence of some minimum energy input (an 'activation energy) which would allow the appropriate energy barrier to be overcome.

By comparison, polyethylene (PE) - especially in cross-linked form - may fully recover over a period of several days (a process which may be hastened by even small changes in storage temperature and/or pressure).

In the latter case, a restraining container 145 (in practice, simple woven sacks or the like) may be used to apply a physical restraint to limit the amount of relaxation occurring, for example during transport. Such a restraint may be applied immediately after the initial compression or after the initial relaxation. Alternatively, a weighted-lid container may be used.

Relaxation effects are more pronounced at higher temperatures. Therefore, in order to limit relaxation and maintain a high compression ratio for unrestrained material the temperature is decreased quickly at the end of collapsing step and the subsequent storage temperature is limited.

The relaxation step typically takes approximately 72 hours or longer.

This stage (S3) of the process may be characterised for example by the following measurements:

| Compacted collapsed volume after relaxation | $V_r$ |
|---|---|
| Compaction / compression ratio | $R_r$ |
| Beads density after relaxation | $d_{br}$ |

The amount of relaxation permitted and whether physical restraint is needed is dependent on the material used.

The compression assist step enhances the collapsing process in that the resulting relaxed volume after compression assist (via relaxation step S3) is lower than the one achieved with the degassing step alone (via relaxation step S3*).

### - S4 - Transport

During transport of the beads the total volume of the beads remains constant. For products which cannot persist in a metastable state, some form of physical restraint may need to be imposed in order to prevent the product undergoing spontaneous recovery. Otherwise, the beads would potentially need to be maintained under reduced pressure conditions in order to keep them in their meta-stable state whilst being transported.

### - S5 - Recovery

The final stage is recovery of the beads to their original form, which is achieved by a process which involves one or more of the following

- pressurisation with a gas, such as air
- steaming
- increasing the temperature

For EPP, pressurisation may be sufficient to cause recovery of the beads; for other materials, heating alone may be sufficient.

Whereas the previous stages are controlled by the supplier, the recovery stage (and in some cases the transport stage) may be controlled by the customer.

The recovery process comprises placing the beads in a compression tank and applying a sequence of pressurising cycles, for example a combination of increasing and decreasing ramps and steady pressure, typically between 0 to 10 bar over a period of typically 5 to 15 hours. Optionally, the tank may be heated to speed up the process (typically to 40-60°C, for example approximately 50°C).

The elevated pressure and/or temperature may be maintained after recovery for further processing such as moulding to proceed directly.

The process parameters (time, temperature, pressure) are interdependent, so the precise values and timings may be varied in practice. For example, heating and pressurisation may not necessarily fully overlap in time.

Neither the pressure nor temperature changes need be linear; they may follow a predetermined or calculated profile. For example, a typical pressure profile comprises 12 hours of increasing pressure, followed by 3 hours of sustained pressure and eventually ramping down during the cycle over several steps to start the recovery process in the tank.

The recovery process may itself comprise two sub-stages:

1. A diffusion stage, during which gas diffuses into the beads
2. At the end of pressurising, the recovery of up to approximately 95% of the initial volume (bulk volume) of the beads is effectively instantaneous.

The volume of gas inside the beads will ideally be the same in order to recover the same properties and performance of the original product. Beads with a density within ±10% of initial bead density are considered to be sufficiently similar as to provide the same properties and performance.

This stage (S5) of the process may be characterised for example by the following measurements:

| Parameter | Preferred value |
| --- | --- |
| Compaction / compression ratio after recovery, $R_r$ | 1 (± 0.1) |
| Beads density after recovery, $d_{br}$ | equal to initial density (±10%) |
| Mechanical properties | equivalent to properties of initial samples |

In a commercial environment, possible options (which may be used in combination) for the recovery step include:

- **Top-emptying**
  Upon opening the recovery tank from the top, the beads are exposed to atmospheric pressure and recover while remaining in the tank. The tank is then emptied. In this case, part of the tank volume is reserved to enable the volume increase during recovery

- ***Bottom-emptying***
  The recovery tank is opened from the bottom while being maintained under pressure. The beads are exposed to atmospheric pressure as they exit the tank. In terms of capacity utilization this is a more efficient way of recovering the beads as this allows the tank to be more fully loaded with beads. In this case, more of the tank volume can be occupied by beads prior to recovery.
- ***Combined with pre-treating***
  Another option is to combine the recovery of the collapsed beads with a pre-treatment process prior to moulding. Pre-treatment is commonly done when moulding with low-density beads and/or for the moulding of low-density parts and typically involves subjecting the beads to a compressed air pressurising cycle in a pressure vessel. This increases the air pressure inside the bead cells and this increased internal pressure improves the bead expandability. Because the pre-treatment process involves similar equipment to that used for the recovery process, and because the final step in the recovery similarly involves a compressed air pressurising cycle, the two processes may be combined. This may be done by changing the pre-treatment cycle conditions (time, pressure, temperature) to achieve recovery of the beads as well as maintaining enough cell pressure to provide the necessary expandability for moulding. Existing equipment at the customer side may be converted for this purpose. Alternatively, where beads are transferred to the press using pressurised pipes, recovery occurs in the machine hopper before the beads are transferred to the moulding chest or tool.

## Testing the resulting product

In order for the process to be viable, the resulting product must have the same properties as the original. Direct comparison of initial and recovered beads in terms of parameters determined from the beads themselves may be difficult. Instead, the comparison is made between products moulded from each type of bead. That products made from recovered beads exhibited similar mechanical properties demonstrated that the reversible compression packing method described above involves a reversible reduction in the bead volume, and is essentially non-destructive. This indicates that after the recovery process, the recovered material has essentially the same properties - in particular the same mechanical properties and same ability to be moulded - as the unprocessed material.

## Alternatives and modifications

The process described above is relates primarily in relation to EPP (expanded polypropylene) in closed cell bead form but is not limited to this shape or material. The process may also be applied to any reversibly compressible material - whether in bead shape or otherwise. Generally, suitable closed-cell foams are those which under certain environmental conditions (typically of temperature, pressure and time) are permeable to atmospheric gases (such as nitrogen, oxygen, carbon dioxide) and under other such conditions are resilient. Examples of such materials include polyolefin foams such as expanded polypropylene (EPP), expanded polyethylene (EPE), and expanded polystyrene (EPS), polyamide foams and reticulated polyethylene (x-PE) - particularly when in bead form.

In some embodiments, the beads are specifically designed (for example, in terms of bead density and/or cell size) to have particular physical properties to enhance their suitability for undergoing the reversible compression process.

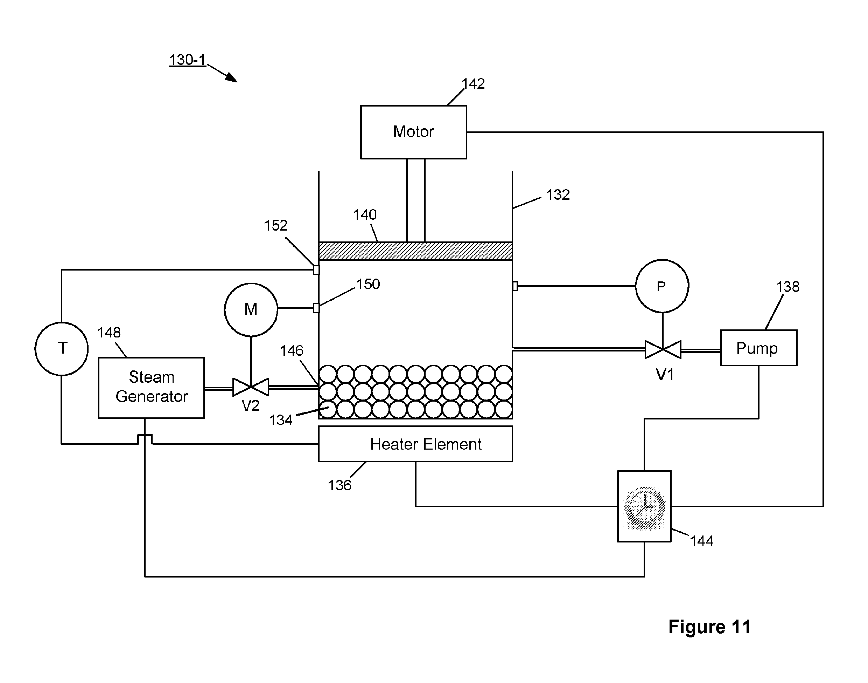

Figure 11 shows a block diagram of an alternative compression apparatus 130-1 using steam. This alternative compression process (which in some embodiments is used in combination with the mechanical compression method) uses 'steam condensation' rather than a vacuum is for degassing the beads.

A steam generator 148 is provided which feeds steam into the pressure chamber 132 via steam inlet 146 controlled by a moisture controller M via valve V2 and by timing device 144.

Firstly, the air surrounding the beads is replaced by steam which is injected from the bottom of the chamber 132 via inlet 146 and forces the air out of the chamber via air vent 150.

As the beads 134 are steamed, the steam penetrates the bead cell walls to drive out the gas contained within. The steam also acts to heat up the beads - this enhances the diffusion and also softens the polymer to improve collapsing performance.

Once the temperature is reached (sensed by temperature sensor 152 at the top of the chamber 132), the steaming is stopped; the pressure vessel 132 (which is also a vacuum vessel) is closed.

When the temperature is subsequently allowed to fall (the tank walls may be cooled with a cold water jacket) the steam condenses, reducing the pressure inside the beads. Atmospheric pressure then causes the bead to collapse.

Finally, compressed air can be used to provide a rapid, short-duration pressure increase in the vessel to enable "compression assist".

An alternative process potentially uses mechanical compression alone for the initial collapsing step.

Theoretically, a maximum compression could be reached with the bead density approaching the raw material density (as discussed above).

The reversible compression packing process described above may be modified by the use of other techniques for decompressing the articles other than those described, both with and without changes in temperature.

References to the use of air or atmospheric gases may, in certain circumstances, also apply to the use of noble gases (such as helium) or other gases.

Further modifications to the overall process may be used to optimise the process and/or the nature of the recovered beads.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

The following clauses in this description summarise features of the invention:

- *collapsing process (degassing)*

1. A method of compressing an assembly of articles, the method comprising:

placing the articles in a pressure and/or heated vessel;
degassing the articles; and
exposing the degassed articles to ambient conditions, such that the pressure difference between the pressure outside the articles and inside the articles causes a structural collapse of the articles.

2. A method according to clause 1, wherein the step of degassing the articles comprises subjecting the articles to a reduced pressure.

3. A method according to clause 1, wherein the step of degassing the articles comprises subjecting the articles to steam.

4. A method according to clause 2, wherein the reduced pressure is at least - 0.5 bar gauge.

5. A method according to clause 4, wherein the reduced pressure is up to -1 bar gauge.

6. A method according to any preceding clause, wherein the step of degassing the articles is performed at an elevated temperature.

7. A method according to clause 6, wherein the elevated temperature is above 50˚C.

8. A method according to clause 7, wherein the elevated temperature is up to 135˚C.

9. A method according to clause 8, wherein the elevated temperature is between 50˚C and 110˚C.

10. A method according to clause 9, wherein the elevated temperature is approximately 60˚C.

11. A method according to any preceding clause, wherein the step of degassing the articles is performed for a predetermined time period.

12. A method according to clause 11, wherein the predetermined time period is at least 5 hours.

13. A method according to clause 12, wherein the predetermined time period is up to 12 hours.

14. A method according to clause 13, wherein the predetermined time period is between 5 and 8 hours.

- *collapsing process (compression assist)*

15. A method according to any preceding clause, further comprising:

compressing the assembly of collapsed articles.

16. A method according to clause 15, wherein the step of compressing the assembly of collapsed articles comprises subjecting the articles to a compressed gas.

17. A method according to clause 16, wherein the compressed gas is air.

18. A method according to clause 16 or 17, wherein the compressed gas is at a pressure of approximately 4kbar.

19. A method according to clause 15, wherein the step of compressing the assembly of collapsed articles comprises subjecting the articles to mechanical compression.

20. A method according to any of clauses 15 to 19, wherein the step of compressing the assembly of collapsed articles is performed at an elevated temperature.

21. A method according to clause 20, wherein the elevated temperature is up to 60˚C.

22. A method according to any of clauses 15 to 21, wherein the step of compressing the assembly of collapsed articles is performed for a determined time period.

23. A method according to clause 22, wherein the determined time period is until the volume of the assembly of articles is approximately constant.

- *relaxation*

24. A method according to any preceding clause, further comprising:

  relaxing the collapsed articles such that they partially recover from being compressed.

25. A method according to clause 24, wherein the relaxing step is performed at ambient pressure.

26. A method according to clause 24 or 25, wherein the relaxing step is performed at an elevated temperature.

27. A method according to clause 26, wherein the elevated temperature is up to 45˚C.

28. A method according to clause 27, wherein the elevated temperature is between 20˚C and 25˚C.

29. A method according to any of clauses 24 to 28, wherein relaxing step is performed for a predetermined time period.

30. A method according to clause 29, wherein the predetermined time period is at least 72 hours.

- *restraint*

31. A method according to any preceding clause, further comprising:

  placing the assembly of collapsed articles in a restraining container.

32. A method according to clause 31, wherein the restraining container is a woven sack.

- *recovery process*

33. A method of recovering articles, the method comprising:

  receiving at a destination articles which have been compressed at a source and transported from the source to the destination; and
  forcibly decompressing at the destination the articles to reinstate them to their original form.

34. A method according to clause 33, wherein the step of forcibly decompressing the articles comprises introducing a gas into the articles.

35. A method according to clause 34, wherein the gas is air.

36. A method according to clause 35, wherein the gas is an atmospheric gas.

37. A method according to any of clauses 34 to 36, wherein the step of forcibly decompressing the articles comprises pressurising the articles to a predetermined pressure.

38. A method according to clause 37, wherein the predetermined pressure is at least 5 bar.

39. A method according to clause 37, wherein the predetermined pressure is between 1 and 10 bar.

40. A method according to any of clauses 33 to 39, wherein the step of forcibly decompressing the articles is performed at an ambient temperature.

41. A method according to any of clauses 33 to 39, wherein the step of forcibly decompressing the articles is performed at an elevated temperature.

42. A method according to clause 41, wherein the elevated temperature is between 40˚C and 80˚C.

43. A method according to clause 42, wherein the elevated temperature is approximately 50˚C.

44. A method according to any of clauses 33 to 43, wherein the step of forcibly decompressing the articles is performed for a predetermined time period.

45. A method according to clause 44, wherein the predetermined time period is at least 10 hours.

46. A method according to clause 45, wherein the predetermined time period is between 10 to 20 hours.

47. A method according to clause 46, wherein the predetermined time period is approximately 15 hours.

48. A method according to any of clauses 44 to 47, wherein at least one of the temperature and the pressure are varied according to a predetermined profile during the predetermined time period.

49. A method according to any of clauses 37 to 48, wherein subsequently the articles are returned to ambient conditions.

50. A method according to clause 49, wherein the articles are maintained at ambient conditions for a time period of at least 48 hours.

51. A method according to any of clauses 33 to 50, wherein the step of forcibly decompressing the articles further comprises pre-treating the articles.

52. A method according to any of clauses 33 to 51, wherein the step of forcibly decompressing the articles is performed at least in part as the articles exit a holding tank.

53. A method according to any of clauses 33 to 52, wherein the step of forcibly decompressing the articles is performed at least in part as the articles are subsequently processed.

- **end-to-end process**

54. A method of facilitating the transport of articles between a source and a destination, comprising the steps of:

compressing the articles at the source;
transporting the articles to the destination; and
recovering the articles at the destination by forcibly decompressing the articles.

- **recovery process (apparatus clauses)**

55. Apparatus for recovering articles at a destination, comprising:

means for receiving articles which have been compressed at a source and transported from the source to the destination; and
means for forcibly decompressing the articles to reinstate them to their original form.

56. Apparatus according to clause 55, wherein the means for forcibly decompressing the articles further comprises means for introducing a gas into the articles.

57. Apparatus according to clause 56, wherein the gas is air.

58. Apparatus according to clause 56, wherein the gas is an atmospheric gas.

59. Apparatus according to any of clauses 56 to 58, wherein the means for introducing a gas into the articles is adapted to pressurise the articles to a predetermined pressure.

60. Apparatus according to clause 59, wherein the predetermined pressure is at least 5 bar.

61. Apparatus according to clause 60, wherein the predetermined pressure is between 5 and 10 bar.

62. Apparatus according to any of clauses 55 to 61, wherein the means for forcibly decompressing the articles is adapted to operate at an ambient temperature.

63. Apparatus according to any of clauses 55 to 61, wherein the means for forcibly decompressing the articles is adapted to operate at an elevated temperature.

64. Apparatus according to clause 63, wherein the elevated temperature is between 40˚C and 60˚C.

65. Apparatus according to clause 64, wherein the elevated temperature is approximately 50˚C.

66. Apparatus according to any of clauses 23 to 65, wherein the means for forcibly decompressing the articles is adapted to operate for a predetermined time period.

67. Apparatus according to clause 66, wherein the predetermined time period is at least 10 hours.

68. Apparatus according to clause 67, wherein the predetermined time period is between 10 to 20 hours.

69. Apparatus according to clause 68, wherein the predetermined time period is approximately 15 hours.

70. Apparatus according to any of clauses 66 to 69, wherein the means for forcibly decompressing the articles is adapted to vary at least one of the temperature and the pressure according to a predetermined profile during the predetermined time period.

71. Apparatus according to any of clauses 59 to 70, wherein the means for forcibly decompressing the articles is adapted to subsequently return the articles to ambient conditions.

72. Apparatus according to clause 71, wherein the means for forcibly decompressing the articles is adapted to maintain the articles at ambient conditions for a time period of at least 48 hours.

73. Apparatus according to any of clauses 55 to 72, wherein the means for forcibly decompressing the articles is further adapted to pre-treat the articles.

74. Apparatus according to any of clauses 55 to 73, wherein the means for forcibly decompressing the articles is adapted to forcibly decompress the articles at least in part as the articles exit a holding tank.

75. Apparatus according to any of clauses 55 to 74, wherein the means for forcibly decompressing the articles is adapted to forcibly decompress the articles at least in part as the articles are subsequently processed.

- *material*

7 6. A method according to any of clauses 1 to 54, wherein the articles comprise a resilient cellular material, such as a resilient closed-cell foam.

7 7. A method according to clause 76, wherein the material comprises a polyolefin foam, such as expanded polypropylene (PP) or polyethylene (PE).

7 8. A method according to clause 76 or 77, wherein the articles are in bead form.

- *other*

79. A method substantially as herein described with reference to the accompanying drawings.

80. Apparatus substantially as herein described with reference to the accompanying drawings.

81. A reversibly compressible polyolefin foam bead substantially as herein described with reference to the accompanying drawings.

**Claims**

1. A method of compressing an assembly of articles, the method comprising:

   placing the articles in a pressure and/or heated vessel;
   degassing the articles; and
   exposing the degassed articles to ambient conditions, such that the pressure difference between the pressure outside the articles and inside the articles causes a structural collapse of the articles.

2. A method according to claim 1, wherein the step of degassing the articles comprises subjecting the articles to a reduced pressure and/or steam, preferably wherein the reduced pressure is at least -0.5 bar gauge, more preferably up to -1 bar gauge.

3. A method according to any preceding claim, wherein the step of degassing the articles is performed at an elevated temperature, preferably above 50°C, up to 135°C, more preferably between 50°C and 110°C, yet more preferably approximately 60°C.

4. A method according to any preceding claim, wherein the step of degassing the articles is performed for a predetermined time period, preferably at least 5 hours, more preferably up to 12 hours, yet more preferably between 5 and 8 hours.

5. A method according to any preceding claim, further comprising:

   compressing the assembly of collapsed articles.

6. A method according to claim 5, wherein the step of compressing the assembly of collapsed articles comprises subjecting the articles to a compressed gas, such as air, preferably at a pressure of approximately 4kbar.

7. A method according to claim 5, wherein the step of compressing the assembly of collapsed articles comprises subjecting the articles to mechanical compression.

8. A method according to any of claims 5 to 7, wherein the step of compressing the assembly of collapsed articles is performed at an elevated temperature, preferably up to 60°C.

9. A method according to any of claims 5 to 8, wherein the step of compressing the assembly of collapsed articles is performed for a determined time period, preferably until the volume of the assembly of articles is approximately constant.

**10.** A method according to any preceding claim, further comprising:

relaxing the collapsed articles such that they partially recover from being compressed, preferably at ambient pressure.

**11.** A method according to claim 10, wherein the relaxing step is performed at an elevated temperature, preferably up to 45˚C, more preferably between 20˚C and 25˚C.

**12.** A method according to any of claims 10 or 11, wherein the relaxing step is performed for a predetermined time period, preferably at least 72 hours.

**13.** A method according to any preceding claim, further comprising:

placing the assembly of collapsed articles in a restraining container, preferably a woven sack.

**14.** A method of recovering articles, the method comprising:

receiving at a destination articles which have been compressed at a source and transported from the source to the destination; and
forcibly decompressing at the destination the articles to reinstate them to their original form.

**15.** A method according to claim 14, wherein the step of forcibly decompressing the articles comprises introducing a gas, preferably air, into the articles.

**16.** A method according to claim 15, wherein the step of forcibly decompressing the articles comprises pressurising the articles to a predetermined pressure, preferably at least 5 bar, more preferably between 1 and 10 bar.

**17.** A method according to claim 15 or 16, wherein the step of forcibly decompressing the articles is performed at an elevated temperature, preferably between 40˚C and 80˚C, more preferably approximately 50˚C.

**18.** A method according to any of claims 14 to 17, wherein the step of forcibly decompressing the articles is performed for a predetermined time period, preferably at least 10 hours, more preferably between 10 to 20 hours, yet more preferably approximately 15 hours.

**19.** A method according to claim 18, wherein at least one of the temperature and the pressure are varied according to a predetermined profile during the predetermined time period.

**20.** A method according to any of claims 18 or 19, wherein subsequently the articles are returned to ambient conditions.

**21.** A method of facilitating the transport of articles between a source and a destination, comprising the steps of:

compressing the articles at the source;
transporting the articles to the destination; and
recovering the articles at the destination by forcibly decompressing the articles.

**22.** A method according to any preceding claim, wherein the articles comprise a resilient cellular material, such as a resilient closed-cell foam, for example a polyolefin foam, such as expanded polypropylene (PP) or polyethylene (PE), preferably wherein the articles are in bead form.

Figure 1

92 → $V_1$

**Figure 2**

98

Air around the beads

Porosity ε

Total Volume V

Air inside the beads

Beads volume $V_B$

96

Polypropylene

94

**Figure 3**

ε = 0.484

ε = 0.385

ε = 0.358

ε = 0.260

ε = 0

100

102

103

104

106

Beads density (g/l)

Uncompacted bulk density (g/l)

**Figure 4**

Ageing

108

110

Collapsing process

Degassing by vacuum
S1

112

Compression assist
S2

114

Relaxation
S3

116

(Ageing time)

Transport
S4

117

Recovery
S5

118

**Figure 5**

120

[Time]
[Temperature]
[Pressure]
[Work]

114

Mechanical compression:
- Pressure
- Work

112

Vacuum depressurization:
- Vacuum pump
- Steam condensation

**Figure 6**

**Figure 7**

# Degassing

Figure 8

EP 2 500 285 A1

Figure 9

EP 2 500 285 A1

Figure 10

Figure 11

EP 2 500 285 A1

**Europäisches Patentamt**
**European Patent Office**
**Office européen des brevets**

# EUROPEAN SEARCH REPORT

Application Number

EP 11 29 0137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 323 585 A2 (KANEGAFUCHI CHEMICAL IND [JP]) 12 July 1989 (1989-07-12) <br> * the whole document * <br> ----- | 1-22 | INV. <br> B65B31/00 <br> B65B63/02 <br> C08J9/22 |
| A | DE 12 64 749 B (BUCHMANN RUDOLF CH) 28 March 1968 (1968-03-28) <br> * the whole document * <br> ----- | 14,21 | |
| X | US 5 026 736 A (PONTIFF THOMAS M [US]) 25 June 1991 (1991-06-25) <br> * column 8, line 31 - line 53 * <br> ----- | 1 | |

| TECHNICAL FIELDS SEARCHED (IPC) |
|---|
| B65B <br> C08J |

The present search report has been drawn up for all claims

| Place of search | Date of completion of the search | Examiner |
|---|---|---|
| Munich | 26 August 2011 | Schelle, Joseph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 29 0137

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2011

| Patent document cited in search report | | Publication date | Patent family member(s) | | Publication date |
|---|---|---|---|---|---|
| EP 0323585 | A2 | 12-07-1989 | CA | 1296150 C | 25-02-1992 |
| | | | DE | 3888508 D1 | 21-04-1994 |
| | | | DE | 3888508 T2 | 23-06-1994 |
| | | | JP | 1156338 A | 19-06-1989 |
| | | | JP | 2037391 C | 28-03-1996 |
| | | | JP | 7039503 B | 01-05-1995 |
| | | | US | 4931477 A | 05-06-1990 |
| | | | US | 5017621 A | 21-05-1991 |
| DE 1264749 | B | 28-03-1968 | NONE | | |
| US 5026736 | A | 25-06-1991 | EP | 0450205 A1 | 09-10-1991 |

EPO FORM P0459